# EUROPEAN PATENT SPECIFICATION

(11) **EP 2 136 567 B1**
(45) Date of publication and mention of the grant of the patent: **07.12.2011**
(21) Application number: 08715415.9
(22) Date of filing: 08.04.2008
(51) Int. Cl.: H04W 4/06, H04W 84/08

(54) **CONTROLLING METHOD AND DEVICE OF GROUP CALL SERVICE**
STEUERUNGSVERFAHREN UND -VORRICHTUNG FÜR EINEN GRUPPENRUFDIENST
PROCÉDÉ ET DISPOSITIF DE COMMANDE D'UN SERVICE D'APPEL DE GROUPE

(30) Priority: 09.04.2007 CN 200710073996
(43) Date of publication of application: 23.12.2009
(73) Proprietor: Huawei Technologies Co., Ltd., Longgang District, Shenzhen Guangdong 518129 (CN)
(72) Inventor: SHEN, Minjun, Shenzhen Guangdong 518129 (CN); QIN, Jun, Shenzhen Guangdong 518129 (CN)
(74) Representative: Haley, Stephen
(86) International application number: PCT/CN2008/070683
(87) International publication number: WO 2008/122244

(56) References cited:
- WO-A-2006/119710
- CN-A- 1 592 436
- CN-A- 1 941 951
- "Digital cellular telecommunications system (Phase 2+); Voice Group Call Service (VGCS); Stage 2 (3GPP TS 43.068 version 6.8.0 Release 6); ETSI TS 143 068" ETSI STANDARDS, LIS, SOPHIA ANTIPOLIS CEDEX, FRANCE, vol. 3-CN1, no. V6.8.0, 1 March 2007 (2007-03-01), page I,1-84, XP014038521 ISSN: 0000-0001
- "Digital cellular telecommunications system (Phase 2+); Voice Broadcast service (VBS); Stage 2 (3GPP TS 43.069 version 6.5.0 Release 6); ETSI TS 143 069" ETSI STANDARDS, LIS, SOPHIA ANTIPOLIS CEDEX, FRANCE, vol. 3-CN1, no. V6.5.0, 1 March 2007 (2007-03-01), page I,1-59, XP014038523 ISSN: 0000-0001
- "Digital cellular telecommunications system (Phase 2+); Mobile radio interface layer 3 specification; Radio Resource Control (RRC) protocol (3GPP TS 44.018 version 6.21.0 Release 6); ETSI TS 144 018" ETSI STANDARDS, LIS, SOPHIA ANTIPOLIS CEDEX, FRANCE, vol. 3-G2, no. V6.21.0, 1 March 2007 (2007-03-01), page I,1-369, XP014038539 ISSN: 0000-0001

## Description

### Field of the Invention

The present invention relates to radio communication technologies, and particularly to a method and an apparatus for controlling a group call service.

### Background of the Invention

Along with the development of radio communication technologies, a trunking radio communication system has emerged. As a rather economical and flexible commanding and scheduling communication system developed recently, the trunking radio communication system is widely used in government agencies, energy and transportation units, airports and docks, industrial and mining enterprises, fire and police stations, water conservancy and military units, to meet the demands for intra-communications within the individual unit. Available channels in a trunking radio communication system are generally shared by all users of the system and the system automatically assigns appropriate channels. Therefore, the trunking radio communication system is a radio scheduling communication system characterized in multi-function and highly efficient, in which resource are shared, costs are partaken, channel resources and services are shared.

A new telephone service type, i.e. a group call is one of basic services of the current trunking radio communication system. Group call service further includes Voice Group Call Service (VGCS) and Voice Broadcast Service (VBS).

The group call characterizes in that a plurality of user terminals participates in a call simultaneously in a semi-duplex communication mode. Each trunking group is assigned with a Group ID and a group call area; the Group ID corresponds to a plurality of users and the group call area is defined as a list of cells inside the network. The information related to a group call is saved in a Home Location Register (HLR) and a Subscriber Identity Module (SIM) when users subscribe. Upon the initiation of a voice group call or voice broadcast call, the system broadcasts notifications in a certain area (i.e., a group call area), so that all user terminals subscribed with the same group ID in the group call area may turn to the group call channel to participate in the voice group call or voice broadcast call. When a subscriber that initiated the group call stops talking, listening service subscribers may take over the uplink (by using a "Push to Talk"[PTT] mechanism) to gain the right of talking. The taking over of the uplink is performed under the "exclusivity" principle, i.e. the user terminal that takes over the uplink first may talk and other user terminals in the group call may take over the uplink only when the uplink becomes free again.

Members of the voice group call or voice broadcast call can be divided into two types: dispatchers and service subscribers. There are at most five dispatchers in each group. And only one service subscriber and at most five dispatchers are allowed to talk simultaneously at any time. A dispatcher may be a fixed line or mobile user who participates in the group call via a dedicated connection. The dispatcher can talk at any time via the dedicated connection. Service subscribers participating in the group call are mobile users who have subscribed to the VGCS. Destination service subscribers participate in the voice group call via a group call channel in the group call area.

The listening service subscribers may gain the right of PTT by taking over the uplink. The taking over of the uplink is implemented with the "exclusivity" principle, i.e. only the first user terminal that takes over the uplink can talk and other user terminals in the group call may take over the uplink merely when the uplink becomes free again. Dispatchers have their own dedicated connections.

When the group call involves a plurality of Mobile Switching Centers (MSCs), only one of the MSCs named as Anchor MSC (or MSC-A) manages the group call and saves major attributes of the group call. And all other MSCs called Relay MSCs (or MSC-R) save a list of the cells in the group call area belonging to the MSC-R. The Anchor MSC is in charge of establishing all connections, including connections to each cell in the group call area belonging to itself, to relevant Relay MSCs and to all dispatchers. The anchor MSC distributes voices via a conference bridge. Furthermore, only one link is established between a Relay MSC and the Anchor MSC and the Relay MSC is in charge of distributing voices to all cells in the group call area belonging to itself.

Nowadays the first channel assignment method of the group call service is characterized in that the talking service subscriber in the group call occupies the group call channel. Specifically, the talking service subscriber exclusively occupies the group call channel uplink and shares the group call channel downlink with other group call service subscribers in the cell. With the first channel assignment method, only one traffic channel, i.e. the group call channel, is provided in each cell within the group call area. In the present Global System for Mobile (GSM) based digital trunking radio communication system, i.e. the Digital Trunking Radio Communication System GT800, such method is called 1.0 Channel Assignment Mode (CHM). The second channel assignment method is characterized in that the talking service subscriber in the group call occupies another dedicated traffic channel than the group call channel. The group call channel uplink is free and the group call channel downlink is shared by all other group call service subscribers. With the second channel assignment method, there is only one traffic channel (i.e. the group call channel) in a cell where there is no talking service subscriber. And there are two traffic channels, i.e. one is the group call channel and the other is the dedicated channel occupied only by the talking service subscriber in the cell where there is the talking service subscriber. Such channel assignment method is called 1.5 CHM in the present GSM based digital trunking radio communication system, i.e. the Digital Trunking Radio Communication System GT800.

The difference between the two group call channel assignment methods results in the differences in functions and applications of the two group call channel assignment methods. Taking the Digital Trunking Radio Communication System GT800 for example, 1.0 CHM and 1.5 CHM have different characteristics in functions and applications.
(1) With 1.0 CHM, the talking service subscriber shares the group call channel with other service subscribers. Therefore, the voice of the talking service subscriber may be fed back over the group call channel and become echo. However, 1.5 CHM may prevent the occurrence of such problem.
(2) For some special services, e.g. talker priority and application-specific data services, service subscribers other than the current talking service subscriber have to implement fast signaling interaction with the network. The signaling interaction can only be carried out in 1.5 CHM to satisfy the requirement of time performance. Because the talking service subscriber in 1.5 CHM does not occupy the group call channel uplink, so that the group call channel uplink can be used to transmit signaling between other service subscribers and the network.

Based on the conventional method, the network may switch the talking service subscriber from the group call channel to a dedicated channel or vice versa at any time, which means the network completely decides the type of the channel assignment mode used by the given group, neither operators nor users may configure the channel assignment mode for the special group in advance.

The conventional method has the following problems. For example, in the Digital Trunking Radio Communication System GT800, the control process of the group call channels is not defined which may result in inconsistency between MSC and Base Station Controller (BSC). Taking the group call channel assignment method in the Digital Trunking Radio Communication System GT800 for example, an MSC informs a BSC to adopt 1.5 CHM, the MSC assigns a dedicated channel to a talking service subscriber. However, the BSC may release the dedicated channel at any time and switch the talking service subscriber to the group call channel. Therefore, channel assignment mode is switched back to 1.0 CHM. If the MSC allocates the talking service subscriber to another dedicated channel again, an endless cycle emerges.

The inconsistency also occurs in the cell change of the talking service subscriber. If the cell change happens with in one BSC, the channel assigned in the target cell is determined by the BSC, i.e. the BSC may switch the talking service subscriber to the group call channel in the target cell (1.0 CHM), or the BSC may assign a new dedicated channel in the target cell and switch the talking service subscriber to the dedicated channel (1.5 CHM).

For a group with special service requirements, such as talker priority and application-specific data services, the system shall always establish and maintain a dedicated channel for the talking service subscriber, i.e. 1.5 CHM. With the technical scheme of the conventional method, the channel assignment methods for the group call can not be controlled, which can not satisfy the performance requirements of the special services.

3GPP TS 43.068 V6.8.0 (2007-03) and ETSI TS 143.068 V6.8.0 represent the 3GPP/ETSI standards for Voice Group Call Service (VGCS).

3GPP TS 43.069 V6.5.0 (2007-03) and ETSI TS 143.069 V6.5.0 represent the 3GPP/ETSI standards for Voice Broadcast Service (VBS).

3GPP TS 44.018 V6.21.0 (2007-03) and ETSI TS 144.018 V6.21.0 provide further details about connection establishment for VGCS and VBS.

### Summary

In view of the above, embodiments of the present invention provide methods and apparatus for controlling a group call service, by which a network may decide channel assignment mode based on the special requirements of a given group and a certain cell on group call services. Therefore, performance requirements of special services can be satisfied.

In a first aspect, the invention consists in a method for a network to control a group call service, comprising:
determining a channel assignment mode of the group call service based on a group call channel assignment mode indication of a group configured by the network in advance when the group call service is initiated, or when a group call service subscriber occupies an uplink, or when a handover occurs in the group call service; and
performing channel assignment for the group call service based on the channel assignment mode of the group call service;
wherein determining the channel assignment mode of the group call service based on the group call channel assignment mode indication of the group comprises either: when a group call is initiated or a group call service subscriber occupies an uplink,
determining, by the network, when the group call channel assignment mode indication of the group indicates 1.0 CHM, to assign a group call channel to a talking service subscriber in the cell where there is a talking service subscriber, wherein 1.0 CHM is a channel assignment method of the group call service in the Global System for Mobile, GSM, -based digital trunking radio communication system wherein the talking service subscriber in the group call occupies the group call channel and the talking service subscriber exclusively occupies the group call channel uplink and shares the group call channel downlink with other group call service subscribers in a cell; or
assigning a dedicated channel to a talking service subscriber in the cell when the group call channel assignment mode indication of the group indicates 1.5 CHM; and keeping the talking service subscriber on the dedicated channel without releasing the dedicated channel assigned to the talking service subscriber unless a handover occurs and the uplink is released, wherein 1.5 CHM is a channel assignment method of the group call service in the GSM-based digital trunking radio communication system wherein the talking service subscriber in the group call occupies another dedicated traffic channel other than the group call channel, the group call channel uplink is free and the group call channel downlink is shared by all other group call service subscribers; or when a handover occurs in the group call service, determining a channel assignment mode of the group call service based on the group call channel assignment mode indication of the group comprises either:
determining to switch a talking service subscriber to a group call channel of a target cell when the group call channel assignment mode indication of the group indicates 1.0 CHM; or
determining to assign a dedicated channel in a target cell and switching a talking service subscriber to the dedicated channel when the group call channel assignment mode indication of the target cell indicates 1.5 CHM.

In a second aspect, the invention consists in an apparatus for controlling a group call service in a network, comprising:
a control unit, adapted to determine a channel assignment mode of the group call service based on a group call channel assignment mode indication of a group configured by the network in advance when the group call service is initiated, or when a group call service subscriber occupies an uplink, or when a handover occurs in the group call service; and
a resource assignment unit, adapted to perform channel assignment for the group call service based on the channel assignment mode of the group call service;
wherein the control unit is adapted to determine the channel assignment mode of the group call service based on the group call channel assignment mode indication of the group by either:
   when a group call is initiated or a group call service subscriber occupies an uplink,
   determining, by the control unit, when the group call channel assignment mode indication of the group indicates 1.0 CHM, to assign a group call channel to a talking service subscriber in the cell where there is a talking service subscriber, wherein 1.0 CHM is a channel assignment method of the group call service in the Global System for Mobile, GSM, -based digital trunking radio communication system wherein the talking service subscriber in the group call occupies the group call channel and the talking service subscriber exclusively occupies the group call channel uplink and shares the group call channel downlink with other group call service subscribers in a cell; or
   assigning a dedicated channel to a talking service subscriber in the cell when the group call channel assignment mode indication of the group indicates 1.5 CHM; and keeping the talking service subscriber on the dedicated channel without releasing the dedicated channel assigned to the talking service subscriber unless a handover occurs and the uplink is released, wherein 1.5 CHM is a channel assignment method of the group call service in the GSM-based digital trunking radio communication system wherein the talking service subscriber in the group call occupies another dedicated traffic channel other than the group call channel, the group call channel uplink is free and the group call channel downlink is shared by all other group call service subscribers; or when a handover occurs in the group call service, determining, by the control unit, the channel assignment mode of the group call service based on the group call channel assignment mode indication of the group by either:
   determining to switch a talking service subscriber to a group call channel of a target cell when the group call channel assignment mode indication of the group indicates 1.0 CHM; or
   determining to assign a dedicated channel in a target cell and switching a talking service subscriber to the dedicated channel when the group call channel assignment mode indication of the target cell indicates 1.5 CHM.

Compared with the conventional method and apparatus, the main differences and effects of the methods and apparatus for controlling the group call services provided by embodiments of the present invention are as follows. For some groups or cells with specific service requirements, the methods and apparatus for controlling the group call services enable a system to perform channel assignment for the group call service according to the channel assignment requirements of the groups or the channel assignment requirements of the cells. Therefore, the method for performing channel assignment for the group call services is controllable and the performance requirements of special services can be satisfied.

### Brief Description of the Drawings

Figure 1 is an illustrative flow chart of a method for controlling a group call service according to a first comparative example to the present invention;
Figure 2 is a schematic diagram illustrating an apparatus for controlling a group call service according to a second comparative example to the present invention;
Figure 3 is a simplified flow chart of a method for controlling a group call service according to a third comparative example to the present invention;
Figure 4 is a simplified flow chart of a method for controlling a group call service according to a first embodiment of the present invention;
Figure 5 is a simplified flow chart of a method for controlling a group call service according to a sixth comparative example to the present invention;
Figure 6 is a simplified flow chart of another method for controlling a group call service according to the sixth comparative example to the present invention;
Figure 7 is a simplified flow chart of a method for controlling a group call service according to a seventh comparative example to the present invention;
Figure 8 is a simplified flow chart illustrating message transmissions of a method for controlling a group call service according to a second embodiment of the present invention;
Figure 9 is a simplified flow chart illustrating message transmissions of a method for controlling a group call service according to a ninth comparative example to the present invention; and
Figure 10 is a simplified flow chart illustrating message transmissions of a method for controlling a group call service according to an eleventh comparative example to the present invention.

### Detailed Description of the Invention

The present invention is further described in detail hereinafter with reference to the accompanying drawings so as to make the objective, technical solution and merits thereof more apparent.

The first comparative example:

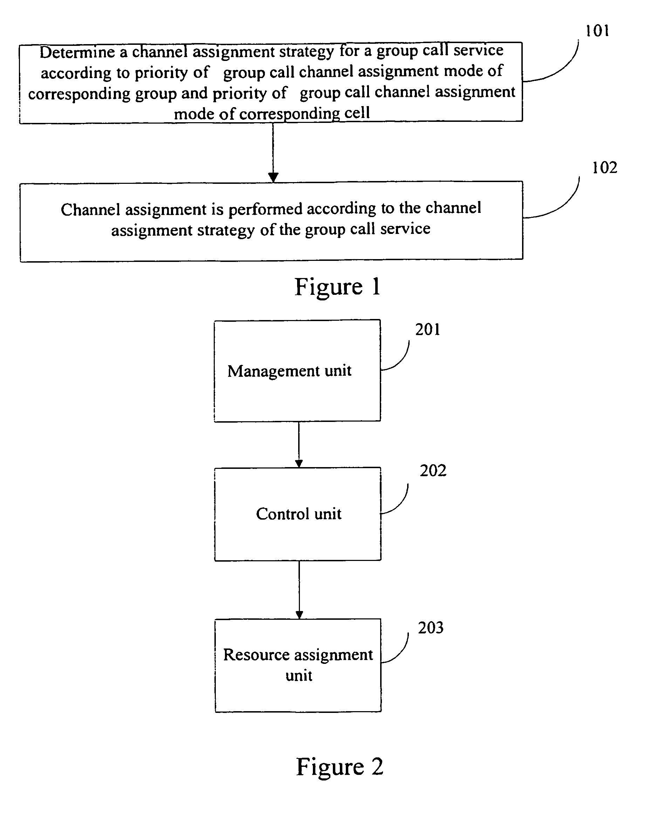

Figure 1 is an illustrative flow chart of a method for controlling a group call service according to the first comparative example to the present invention. The flow includes the following processes.

Block 101: A network determines a channel assignment strategy for a group call service according to priority of group call channel assignment mode of corresponding group and priority of group call channel assignment mode of corresponding cell.

In practical, the network may configure group call channel assignment mode requirement of the group and group call channel assignment mode requirement of the cell in advance. The network may also configure the priority of the group call channel assignment mode requirement of the group and the priority of the group call channel assignment mode requirement of the cell respectively.

When the priority of the group call channel assignment mode requirement of the group is higher than that of the cell, the network performs channel assignment according to the group call channel assignment mode requirement of the group. When the priority of the group call channel assignment mode requirement of the cell is higher than that of the group, the network performs channel assignment according to the group call channel assignment mode requirement of the cell.

Furthermore, the determining of the channel assignment strategy of the group call service may specifically include: determining the channel assignment strategy according to whether channel assignment mode requirement of the group or that of the cell is a special channel assignment requirement. Here, the special channel assignment requirement is 1.5 CHM in the group call.

When the group call channel assignment mode requirement of the group is a special channel assignment requirement while the group call channel assignment mode requirement of the cell is not the special channel assignment requirement, channel assignment for the group call shall be performed according to the group call channel assignment mode requirement of the group, i.e. a dedicated traffic channel shall be assigned only to the talking service subscribers according to 1.5 CHM.

When the group call channel assignment mode requirement of the cell is the special channel assignment requirement while the group call channel assignment mode requirement of the group is not the special channel assignment requirement, the channel assignment for the group call shall be assigned according to the group call channel assignment mode requirement of the cell, i.e. a dedicated traffic channel shall be assigned only to the talking service subscribers according to 1.5 CHM.

When both the group call channel assignment mode requirement of the cell and the group call channel assignment mode requirement of the group are the special channel assignment requirement, a dedicated traffic channel along with a group call channel shall be assigned to the group call service subscribers according to the special channel assignment requirement.

When neither the group call channel assignment mode requirement of the cell nor that of the group is the special channel assignment requirement, i.e. neither the cell nor the group has special requirements on the group call channel assignment strategy, the network assigns only a group call channel for the current group call in a default mode, i.e., 1.0 CHM which is a commonly adopted channel assignment mode in current group call services.

Block 102: Channel assignment is performed according to the channel assignment strategy of the group call service.

The method for controlling the group call service provided in the first comparative example to the present invention can be used to perform channel assignment for the group upon the initiation of the group call service or when a group call service subscriber occupies the uplink, or a handover occurs during the group call.

Furthermore, upon the initiation of a group call service, the MSC, in order to satisfy the special channel type requirement of the group, MSC judges whether the group call requires designated channel type requirement according to the group call channel type requirement specified by the group or channel assignment mode requirement identification of the group. If the group call requires a special channel type, the MSC performs channel assignment for the group call according to the group call channel type indicated by a default group call channel type identification of the group; otherwise the MSC acquires a default group call channel type indication of the cell and performs channel assignment for the group call according to the channel type indicated by the default group call channel type indication. When the MSC cannot acquire the default group call channel type indication of the cell, the MSC randomly assigns a group call channel type. When optimized channel assignment of the cell is required with a higher priority, the MSC shall acquire the default group call channel type indication of the cell firstly while setting up the group call and perform channel assignment for the group call according to the channel type indicated by the default group call channel type indication. When the default group call channel type of the cell is not set in advance, channel assignment for the group call shall be performed according to the default channel type indication of the group. If the default group call channel type of the group is not set either, the MSC may randomly assign a group call channel type.

When a handover occurs in the group call, if the talking service subscriber shall reselect cell, the group call channel assignment mode shall be decided by an MSC which the target cell belongs to. In order to satisfy the special channel type requirement of the group first, the MSC may determine the group call channel assignment mode by: judging whether the group call requires designated channel type according to the group call channel type requirement indication of the group. If the group call requires a specific channel type, the MSC assigns the group call channel type indicated by the default group call channel type indication of the group for the target cell; otherwise the MSC assigns the group call channel type indicated by the default group call channel type indication of the cell for the target cell. When the MSC cannot acquire the default group call channel type indication of the cell, the MSC randomly performs channel assignment for the group call by itself. When channel assignment of the cell is required with a higher priority, the MSC may determine the group call channel assignment mode by: assigning a group call channel type indicated by the default group call channel type indication of the cell for the target cell. If the default group call channel type indication of the cell is not set in advance, the MSC shall assign a group call channel type indicated by the default group call channel type indication of the group for the target cell. If the default group call channel type indication of the group is not set in advance either, the MSC may randomly assign a group call channel type by itself.

In the preceding processes, the MSC may be an Anchor MSC or a Relay MSC.

With the technical scheme provided by the first comparative example, the channel assignment mode requirement of the group and the channel assignment mode requirement of the cell can be processed according to the priorities, or whether a special channel assignment requirement is configured. Therefore, the group call channel assignment is controllable and the requirements of special services can be satisfied.

The second comparative example:

The second comparative example to the present invention provides an apparatus for controlling the group call service by applying the method provided in the first comparative example for controlling the group call service. The apparatus includes the following parts.

As shown in Figure 2,
201 is a management unit, used to configure group call channel assignment mode requirement of the group and group call channel assignment mode requirement of the cell according to practical requirements, and configure priority of the group call channel assignment mode requirement of the group and priority of the group call channel assignment mode requirement of the cell.
202 is a control unit, used to determine a channel assignment strategy of the group call service according to the group call channel assignment mode requirement of the group and the group call channel assignment mode requirements of the cell, or the respective priorities of the group call channel assignment mode requirement configured by the management unit.
203 is a resource assignment unit, used to perform channel assignment for the group call service according to the channel assignment strategy determined by the control unit.

The operations of the different parts of the apparatus are described as follows.

### I.

The management unit configures the group call channel assignment mode requirement of the group and the group call channel assignment mode requirement of the cell in advance, and configures the priority of the group call channel assignment mode requirement of the group and the priority of the group call channel assignment mode requirement of the cell respectively.

When the priority of the group call channel assignment mode requirement of the group is higher than that of the cell, the control unit determines to perform channel assignment according to the group call channel assignment mode requirement of the group.

When the priority of the group call channel assignment mode requirement of the cell is higher than that of the group, as is configured by the management unit, the control unit determines to perform channel assignment for the group call service according to the group call channel assignment mode requirement of the cell.

### II.

When the management unit configures the group call channel assignment mode requirement of the group as a special channel assignment requirement while the group call channel assignment mode requirement of the cell as a non special channel assignment requirement, the control unit determines the channel assignment strategy according to the group call channel assignment mode requirement of the group, i.e. according to the requirement of 1.5 CHM. Then, the resource assignment unit assigns the talking service subscriber an additional dedicated traffic channel for the group call service.

When the management unit configures the group call channel assignment mode requirement of the cell as a special channel assignment requirement while the group call channel assignment mode requirement of the group as a non special channel assignment requirement, the control unit determines the channel assignment strategy according to the group call channel assignment mode requirement of the cell, i.e. according to the requirement of 1.5 CHM. Then the resource assignment unit assigns the talking service subscriber the dedicated traffic channel for the group call service.

When the management unit configures the group call channel assignment mode requirement of the cell as a special channel assignment requirement and so is the group call channel assignment mode requirement of the group, the control unit determines the channel assignment strategy according to the group call channel assignment mode requirement of the cell, i.e. according to the requirement of 1.5 CHM (in fact, both the group call channel assignment mode requirement of the cell and the group call channel assignment mode requirement of the group are destined for 1.5 CHM). Then, the resource assignment unit assigns the talking service subscriber the dedicated traffic channel for the group call service.

When the management unit configures the group call channel assignment mode requirement of the cell as a non special channel assignment requirement and so is the group call channel assignment mode requirement of the group, i.e., both the cell and the group do not have special requirements on the group call channel assignment mode, the control unit determines the channel assignment strategy according to the default group call channel assignment mode, i.e., according to 1.0 CHM which is a relative common channel assignment mode in the present group call service.

The apparatus provided by the second comparative example for controlling the group call service may further include a storage unit. The storage unit is used to store the group call channel assignment mode requirement of the group and the group call channel assignment mode requirement of the cell respectively configured by the management unit and the corresponding priorities of the group call channel assignment mode requirement. The storage unit may further include a Group Call Register (GCR) which stores information such as the channel assignment mode requirement indication of the group.

The apparatus provided by the second comparative example for controlling the group call service may further include an information transmission unit used to transmit the information configured by the management unit to devices on the network.

With the apparatus provided in the second comparative example for controlling the group call services, the group call channel assignment becomes controllable, and the uncontrollable group call channel assignment in the conventional method may be prevented.

The third comparative example:

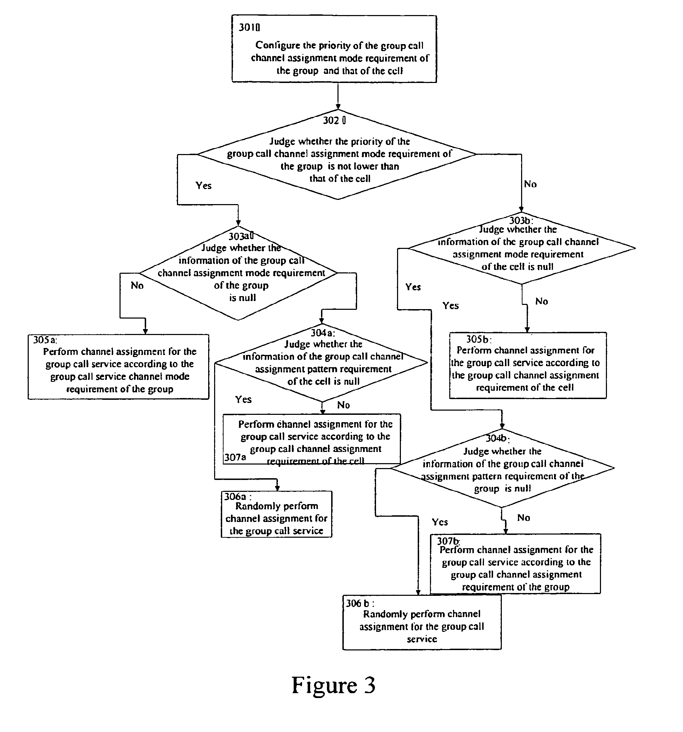

Figure 3 is a further illustration of the method provided in the first comparative example for controlling the group call service. The flow includes the following blocks.

Block 301: The network configures the priority of the group call channel assignment mode requirement of the group and the priority of the group call channel assignment mode requirement of the cell respectively.

Block 302: The network judges whether the priority of the group call channel assignment mode requirement of the group is higher than that of the cell. If the priority of the group call channel assignment mode requirement of the group is higher than that of the cell, Block 303a is performed; otherwise, Block 303b is performed.

Block 303a: The network judges whether the information of the group call channel assignment mode requirement of the group is null. If the information is null, Block 304a is performed. If the information of the group call channel assignment mode requirement of the group is not null, Block 305a is performed.

Block 304a: The network judges whether the information of the group call channel assignment mode requirement of the cell is null. If the information of the group call channel assignment mode requirement of the cell is null, Block 306a is implemented. If the information of the group call channel assignment mode requirement of the cell is not null, Block 307a is implemented.

Block 305a: The network performs channel assignment for the group call service according to the group call service channel mode requirement of the group.

Block 306a: The network randomly performs channel assignment for the group call service.

Block 307a: The network performs channel assignment for the group call service according to the group call channel assignment requirement of the cell.

Block 303b: The network judges whether the information of the group call channel assignment mode requirement of the cell is null. If the information of the group call channel assignment mode requirement of the cell is null, Block 304b is implemented; otherwise, Block 305b is implemented.

Block 304b: The network judges whether the information of the group call channel assignment mode requirement of the group is null. If the group call channel assignment mode requirement information of the group is null, Block 306b is implemented; otherwise Block 307b is implemented.

Block 305b: The network performs channel assignment for the group call service according to the group call channel assignment requirement of the cell.

Block 306b: The network randomly performs channel assignment for the group call service.

Block 307b: The network performs channel assignment for the group call service according to the group call channel assignment requirement of the group.

The fourth comparative example:

The fourth comparative example to the present invention provides a method for controlling the group call service. The method includes: configuring, by a network, a uniform group call service channel assignment strategy for the whole network in advance, performing channel assignment for a group call service according to the uniform group call service channel assignment strategy. That means, during the channel assignment process, the uniform group call channel assignment strategy needs to be adopted for the group call channel assignment according to the channel assignment requirements of both the group and the cell. The method of this comparative example can be applied in the situation that a group call is established or a group call service subscriber occupies the uplink, or an inter-cell handover occurs during the group call.

All cells and groups under a MSC are set to follow a uniform mode and the uniform group call service channel assignment strategy or channel type indication of the whole network are saved in the MSC. Therefore, there is no need to acquire such information from GCR or other network elements.

To be specific, the whole network may follow 1.0 CHM to assign each talking service subscriber to the respective group call channel uniformly, or the whole network may follow 1.5 CHM to assign each talking service subscriber to a dedicated channel associated with the respective group call service.

With the method provided by the fourth comparative example to the present invention for controlling the group call service, the group call channel assignment mode in the whole network can be configured uniformly.

The fifth comparative example:

The fifth compar ative example to the present invention provides an apparatus for controlling the group call service. The apparatus can be used for implementing the method provided by the fourth comparative example for controlling the group call service. The apparatus includes a control unit and a resource assignment unit.

The control unit is used to configure a uniform group call service channel assignment strategy.

The resource assignment unit is used to perform channel assignment for the group call service according to the uniform group call service channel assignment strategy configured by the control unit.

The apparatus provided by the fifth comparative example for controlling the group call service may further include a storage unit. The storage unit is used to store the uniform group call service channel assignment strategy configured by the control unit in advance.

Furthermore, the apparatus provided by the fifth comparative example for controlling the group call service may further include an information transmission unit. The information transmission is used to transmit the information configured by the control unit to devices on the network.

The first embodiment:

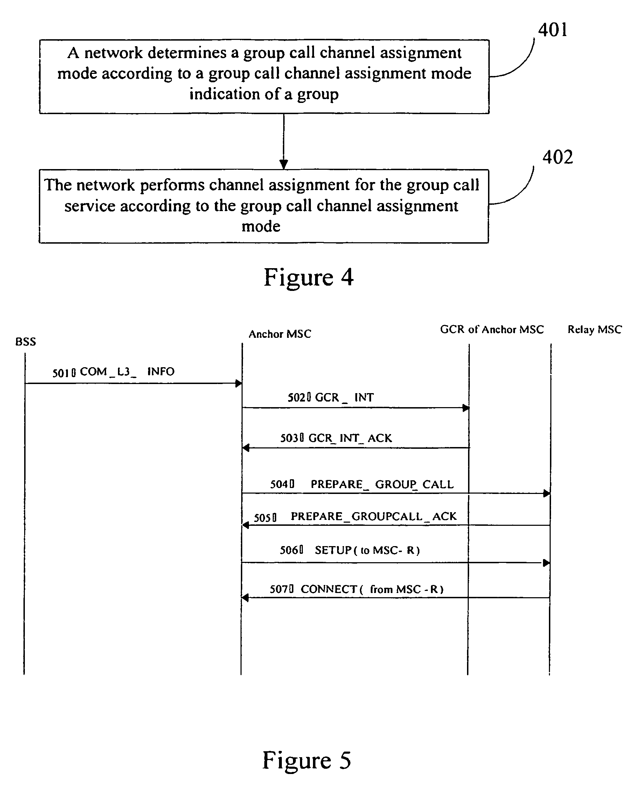

The first embodiment of the present invention provides a method for controlling the group call service, so that channel assignment can be performed according to the group call channel assignment mode of the group. As shown in Figure 4, the method includes the following processes.

Process 401: A network determines a group call channel assignment mode according to a group call channel assignment mode indication of a group.

Process 402: The network performs channel assignment for the group call service according to the group call channel assignment mode.

The network configures the group call channel assignment mode indication of the group in advance.

Specifically, when the group call channel assignment mode indication of the group is a value indicating 1.0 CHM, the group call channel assignment mode of the group is configured as 1.0 CHM. When the group call channel assignment mode indication of the group is a value indicating 1.5 CHM, the group call channel assignment mode of the group is configured as 1.5 CHM. The process of determining the channel assignment mode is described as follows.

### I.

When a group call is established or a group call service subscriber occupies an uplink, two processes may be adopted as follows.

In the first situation, when the group call channel assignment mode of the group is 1.0 CHM, the group call channel in current cell shall be assigned and maintained for the currently talking service subscriber. The group call channel in the current cell will be maintained by the talking service subscriber unless the talking service subscriber handovers into another cell or releases the group call channel uplink.

In the second situation, when the group call channel assignment mode of the group is 1.5 CHM, a dedicated channel shall be assigned and maintained for the currently talking service subscriber in current cell. The dedicated channel assigned to the currently talking service subscriber will not be released unless the talking service subscriber handovers into another cell or releases the group call channel uplink.

### II.

When a handover occurs in the group call, two processes may be adopted as follows.

In the first situation, when the group call channel assignment mode of the group is 1.0 CHM, the current talking service subscriber shall be switched to the group call channel of the target cell.

In the second situation, when the group call channel assignment mode of the target cell is 1.5 CHM, a dedicated channel shall be assigned in the target cell and the current talking service subscriber shall be switched to the dedicated channel.

Alternatively, the talking service subscriber is switched to the group call channel of the target cell first, while a dedicated channel is assigned in the target cell and then the current talking service subscriber is allocated to the dedicated channel. The dedicated channel assigned to the current talking service subscriber will not be released unless the talking service subscriber handovers into another cell or releases the group call channel uplink..

The group call channel assignment mode indication of the group can be saved in a GCR, and carried in a GCR interrogation acknowledgement message and a Prepare group call message for the transmission across the network.

When the group call channel assignment mode indication of the group is null, the network may perform channel assignment for the group call service according to the group call channel assignment mode indication of the cell. If the group call channel assignment mode indication of the cell is also null; the network may perform channel assignment for the group call service according to the default group call channel assignment mode, i.e., 1.0 CHM, or randomly perform channel assignment for the group call service according to the situation of the network.

The sixth comparative example:

The sixth comparative example to the present invention provides a method for controlling the group call service to further illustrate the first embodiment of the present invention.

For the group call services, a default group call channel type indication of the cell may be added into cell configuration data in each MSC. When a group call is established in a cell belonging to the MSC and the group has no special requirements for the group call channel type, the MSC performs channel assignment for the group call in the cell according to the channel type indicated by the indication.

If a group requires special services and needs to designate channel type, a default group call channel type indication can be added for each group in the configuration data in the GCR. The default group call channel type indication may include a specified group call channel type requirement indication of the group or a default group call channel type indication of the group, which, respectively, indicates the group has a specified group call channel type requirement or a default group call channel type requirement.

The specified group call channel type requirement may be 1.5 CHM of the group call service and the default group call channel type may be 1.0 CHM of the group call service.

In the process of establishing the group call of the group, the GCR sends the default group call channel type indication to an Anchor MSC in a GCR_INT_ACK message. Then the Anchor MSC informs each Relay MSC of the default group call channel type indication via a PREPARE GROUP CALL message. Both the Anchor MSC and the Relay MSCs store the group call channel type requirement indication and the default group call channel type indication of the group during the whole group call.

Figure 5 shows the message transmissions between the Anchor MSC and the GCR and between the Anchor MSC and the Relay MSC in the case where the group call is established by a service subscriber roaming in the Anchor MSC.

Process 501: Complete layer 3 information (COM_L3_INFO), i.e. an initial message about the voice group call, includes group call initial information for establishing a group call by a service subscriber.

Process 502: A GCR interrogation (GCR_INT) message is used to request for the group call attributes.

Process 503: A GCR interrogate acknowledgement (GCR_INT_ACK) message is used to return the group call attributes. The group call attributes include the specified group call channel type of the group.

Block 504: A prepare group call (PREPARE_GROUP_CALL) message is used to send the group call attributes which include the specified group call channel type of the group to the Relay MSC.

Process 505: A prepare group call acknowledgement (PREPARE_GROUP CALL_ACK) message is used to return the Group Call number.

Process 506: A setup message (SETUP (to MSC-R)) is used to set up an Integrated Services Digital Network User Part (ISUP) connection to the Relay MSC.

Process 507: A connect message (CONNECT (from MSC-R)) is used to confirm the setup of the ISUP connection.

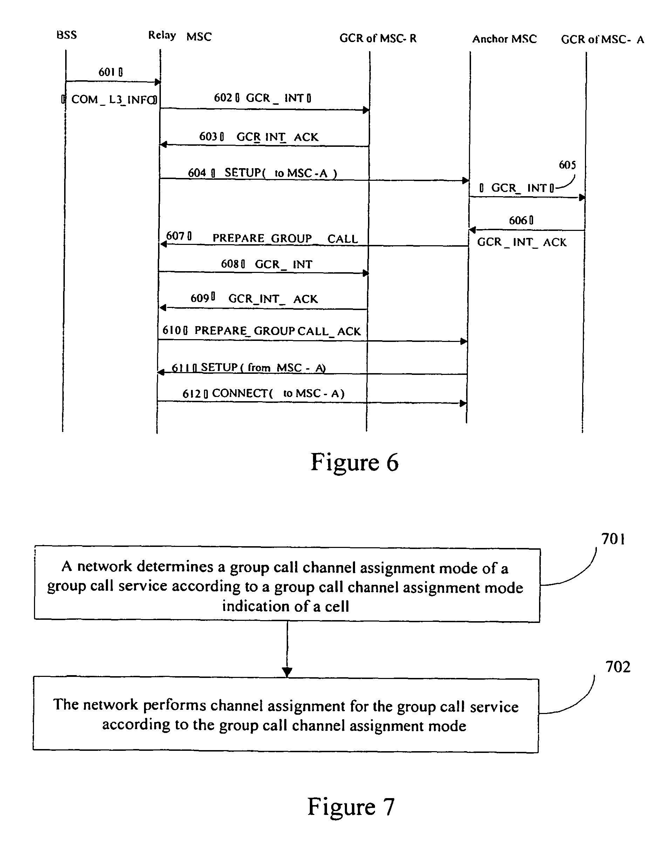

Figure 6 shows message transmissions between the MSCs and the respective GCRs and between the Anchor MSC and the Relay MSC in the case where the group call is established by a service subscriber roaming in the Relay MSC.

Process 601: Complete layer 3 information (COM_L3_INFO) is an initial message about the voice group call, including group call initial information for establishing a group call by a service subscriber.

Process 602: A GCR interrogation (GCR_INT) message is used to request for the group call attributes.

Process 603: A GCR interrogate acknowledgement (GCR_INT_ACK) message is used to return the group call attributes. The group call attributes include the Anchor MSC address corresponding to the group.

Process 604: A setup message (SETUP (to MSC-A)) is used to set up a dedicated connection to the Anchor MSC for the group call initiator.

Process 605: A GCR interrogation (GCR_INT) message is used to request for the group call attributes.

Process 606: A GCR interrogate acknowledgement (GCR_INT_ACK) message is used to return the group call attributes which include the specified group call channel type of the group.

Process 607: A prepare group call (PREPARE_GROUP_CALL) message is used to send the group call attributes to the Relay MSC. The group call attributes include the specified group call channel type of the group.

Process 608: A GCR interrogation (GCR_INT) message is used to request for the group call attributes.

Process 609: A GCR interrogate acknowledgement (GCR_INT_ACK) message is used to return the group call attributes. The group call attributes include a list of the group call cells in the MSC.

Process 610: A prepare group call acknowledgement (PREPARE_GROUP CALL_ACK) message is used to return the Group Call number.

Process 611: A setup message (SETUP (from MSC-A)) is used to set up an ISUP connection to the Relay MSC.

Block 612: A connect message (CONNECT (to MSC-A)) is used to confirm the setup of the ISUP connection.

Furthermore, if the special channel type requirement of the group shall be satisfied first, the Anchor MSC and the Relay MSCs judge, while setting up the group call, whether the group call needs a specified channel type requirement according to the specified group call channel type requirement indication of the group. If the group call needs the special channel type requirement, channel assignment for the group call shall be performed according to the default group call channel type indication of the group; otherwise the MSC searches for the default group call channel type indication of the cell and performs channel assignment for the group call according to the channel type indicated by the indication. When the MSC cannot acquire the default group call channel type indication of the cell, channel assignment for the group call shall be performed randomly. If optimized channel assignment of the cell is required with higher priority, for each group call cell, the Anchor MSC and Relay MSCs shall first acquire the default group call channel type indication of the cell while setting up the group call and perform channel assignment for the group call according to the channel type indicated by the default group call channel type indication. When there is no default group call channel type configured for the cell, channel assignment for the group call shall be performed according to the default channel type indication of the corresponding group. Furthermore, if there is no default group call channel type configured for the group either, the MSC may perform channel assignment for the group call randomly.

In the group call, when the talking service subscriber handovers into another cell, the group call channel assignment mode of the target cell is decided by the MSC controlling the target cell. For satisfying the special channel type requirement of the group first, the MSC may determine the value of the group call channel assignment mode as follows. The MSC judges whether the group call has specified channel type requirement according to the specified channel type requirement indication of the group. When the group has a special channel type requirement, the group call channel type indicated by the default group call channel type indication of the group is taken as the group call channel type of the target cell; otherwise the MSC takes the group call channel type indicated by the default channel type indication of the cell as the group call channel type of the target cell. When the MSC cannot acquire the default group call channel type indication of the cell, the MSC randomly performs channel assignment for the group call. When optimized channel assignment mode of the cell shall be adopted with higher priority, the MSC may determine the value of the group call channel assignment mode as follows. The MSC assigns a group call channel type indicated by the default group call channel type indication of the cell to the target cell. If there is no default group call channel type indication configured for the cell, the MSC will assign a group call channel type indicated by the default group call channel type indication of the corresponding group to the target cell. If there is no default group call channel type configured for the group either, the MSC may randomly perform channel assignment for the group call.

When the current talking service subscriber occupies a dedicated channel and does not handover into other cells, the BSC may release the dedicated channel merely when the radio link breaks and the MSC sends an instruction of removal.

The specified channel type requirement and the special channel assignment requirement may be 1.5 CHM, and the default group call channel type indication of the cell may be 1.0 CHM.

The seventh comparative example:

The seventh comparative example to the present invention provides a method for controlling the group call service. As shown in Figure 7, channel assignment for the group call service can be performed according to the group call channel assignment mode requirement of the cell. The method includes the following processes.

Block 701: A network determines a group call channel assignment mode of a group call service according to a group call channel assignment mode indication of a cell.

Block 702: The network performs channel assignment for the group call service according to the group call channel assignment mode.

The network configures the group call channel assignment mode indication of the cell in advance.

Specifically, when the group call channel assignment mode indication of the cell is a value indicating 1.0 CHM, the group call channel assignment mode of the cell shall be configured as 1.0 CHM. When the group call channel assignment mode indication of the cell is a value indicating 1.5 CHM, the group call channel assignment mode of the cell shall be configured as 1.5 CHM. The process of determining the channel assignment mode is described in detail as follows.

### I.

When a group call is being initiated or a group call service subscriber occupies the uplink, two processes may be adopted as follows.

In the first situation, when the channel assignment mode of the current cell is 1.0 CHM, the network keeps the current talking service subscriber on the group call channel of the cell, unless the talking service subscriber handovers into another cell and releases the group call channel uplink.

In the second situation, when the channel assignment mode of the current cell is 1.5 CHM, the network assigns for the current talking service subscriber a dedicated channel in the cell where there is the current talking service subscriber and keeps the talking service subscriber on the dedicated channel. The dedicated channel assigned to the current talking service subscriber shall not be released unless the talking service subscriber handovers into another cell and releases the group call channel uplink.

### II.

When a handover occurs in the group call, two processes may be adopted as follows.

In the first situation, if the group call channel assignment mode of the target cell is 1.0 CHM, the currently talking service subscriber will be switched to the group call channel of the target cell.

In the second situation, the group call channel assignment mode of the target cell is 1.5 CHM, the BSC shall be informed to assign a dedicated channel in the target cell and the currently talking service subscriber will be switched to the dedicated channel.

Alternatively, the talking service subscriber is switched to the group call channel of the target cell first, then the BSC shall be informed to assign a dedicated channel in the target cell and the currently talking service subscriber shall be allocated to the dedicated channel.

Furthermore, when the group call channel assignment mode indication of the group is null, the network performs channel assignment for the group call according to the group call channel assignment mode indication of the cell.

Alternatively, when both the group call channel assignment mode indications of the group and the group call channel assignment mode indications of the cell are null, the network performs channel assignment for the group call randomly.

The second embodiment:

The second embodiment of the present invention provides an apparatus for controlling the group call service. The apparatus can be used for implementing the methods provided by the first embodiment and seventh comparative example for controlling the group call service. The apparatus includes a management unit, a control unit and a resource assignment unit.

The management unit is used to configure group call channel assignment mode indication(s) of any of the group and /or group call channel assignment mode indication(s) of any of the cell.

The control unit is used to determine a channel assignment strategy of the group call service according to the received group call channel assignment mode indication(s) of any of the group and /or the received group call channel assignment mode indication(s) of any of the cell.

The resource assignment unit is used to perform channel assignment for the group call service according to the channel assignment strategy of the group call service as determined by the control unit.

Furthermore, like the apparatus provided by the fifth comparative example for controlling the group call service, the apparatus may further include an information transmission unit. The information transmission is used to transmit the information set up by the management unit to devices on the network.

The interactions between the above units may be described in accordance with the methods provided by the first embodiment and the seventh comparative example for controlling the group call services.

The eigth comparative example:

The eigth comparative example to the present invention provides a method for controlling the group call service to further illustrate the seventh comparative example to the present invention.

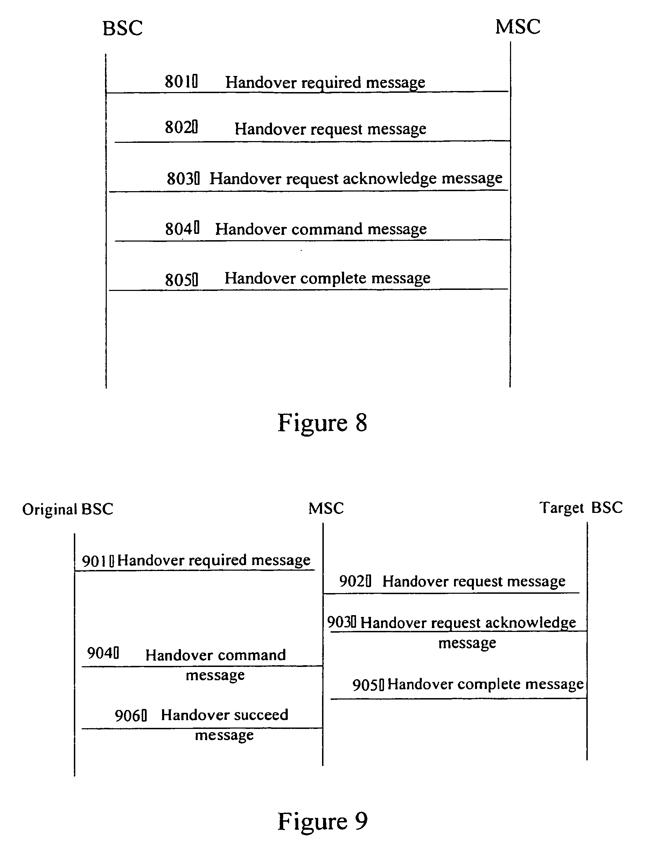

When the talking service subscriber of the group call performs a handover between the cells both belonging to the same BSC and the MSC determines that 1.0 CHM is adopted in the target cell, the BSC sends a handover request message to the MSC so that the MSC will determine the group call channel assignment mode of the target cell and switch the talking service subscriber to the group call channel of the target cell. The signaling transmissions are shown in Figure 8, including the following processes.

Process 801: The BSC sends the MSC a handover required message including the target cell identifier via the original Signaling Connection Control Part (SCCP) connection corresponding to the current talking service subscriber.

Process 802: The MSC sends the handover request message to the BSC via the group call resource control SCCP connection corresponding to the target cell.

Process 803: The BSC sends the MSC the channel description of the target cell in a handover request acknowledge message.

Process 804: The MSC sends the BSC a handover command message including the channel description of the target cell via the original SCCP connection corresponding to the current talking service subscriber, the BSC switches the talking service subscriber to the group call channel of the target cell.

Process 805: After the handover, the BSC sends the MSC a handover complete message via the group call resource control SCCP connection corresponding to the target cell.

The ninth comparative example:

The ninth comparative example to the present invention provides a method for controlling the group call service to further illustrate the seventh comparative example to the present invention.

When the talking service subscriber of the group call performs an inter-BSC handover, i.e., the target cell and the original cell belong to different BSCs respectively, and the MSC determines that 1.0 CHM is adopted in the target cell, the BSC sends the handover request to the MSC so that the MSC will determine the group call channel assignment of the target cell and switch the talking service subscriber to the group call channel of the target cell. The signaling transmissions are shown in Figure 9, including the following processes.

Process 901: The original BSC sends the MSC a Handover required message including the target cell identifier via the SCCP connection corresponding to the current talking service subscriber.

Process 902: The MSC sends the target BSC the Handover request message via the group call resource control SCCP connection corresponding to the target cell.

Process 903: The target BSC sends the MSC the channel description of the target cell in the Handover request acknowledge message.

Process 904: The MSC sends the original BSC the Handover command message including the channel description of the target cell via the SCCP connection corresponding to the current talking service subscriber and the original BSC switches the talking service subscriber to the group call channel of the target cell.

Process 905: After the handover, the target BS C sends the MSC the H andover complete message via the group call resource control SCCP connection corresponding to the target cell.

Process 906: The MSC sends the original BSC the Handover succeeded message.

The tenth comparative example:

The tenth comparative example to the present invention provides a method for controlling the group call service to further illustrate the seventh comparative example to the present invention.

When the talking service subscriber of the group call performs an inter-MSC handover, i.e., the target cell and the original cell belong to different MSCs respectively, and the target MSC determines that 1.0 CHM is adopted in the target cell, the BSC sends the handover request message to the MSCs so that the MSCs will handle the group call service channel assignment of the target cell and switch the talking service subscriber to the group call channel in the target cell. The signaling transmissions include the following processes.

Block One: The original BSC sends the original MSC the Handover required message including the target cell identifier via the SCCP connection corresponding to the current talking service subscriber.

Block Two: The original MSC sends the target MSC the MAP PREPARE HANDOVER message.

Block Three: The target MSC sends the target BSC the Handover request message via the group call resource control SCCP connection corresponding to the target cell.

Block Four: The target BSC sends the target MSC the channel description of the target cell in the Handover request acknowledge message.

Block Five: The target MSC forwards the MAP PREPARE HANDOVER acknowledge message to the original MSC.

Block Six: The original MSC sends the original BSC the Handover command message including the channel description of the target cell via the SCCP connection corresponding to the current talking service subscriber and the original BSC switches the talking service subscriber to the group call channel of the target cell.

Block Seven: After the handover, the target BSC sends the target MSC the Handover complete message via the group call resource control SCCP connection corresponding to the target cell.

Block Eight: The target MSC sends the original MSC the Handover complete message.

Block Nine: The original MSC sends the original BSC the Handover succeeded message.

The eleventh comparative example:

The eleventh comparative example to the present invention provides a method for controlling the group call service to further illustrate the seventh comparative example to the present invention.

When the talking group call service subscriber performs a handover procedure (the target cell and the original cell respectively belong to the same BSC, or the different BSCs belonging to the same MSC, or the different MSCs) and the MSC controlling the target cell determines that 1.0 CHM is adopted in the target cell. Two processes may be adopted as follows. In addition, if the target cell and the original cell belong to the same BSC, the original BSC and the target BSC in the following description are the same BSC. If the target cell and the original cell belong to the same BSC, or the different BSCs belonging to the same MSC, the original MSC and the target MSC is the same MSC.

Method 1: The BSC sends the Handover required message to the MSC so that the MSC(s) handles the group call service channel assignment of the target cell first and switches the talking service subscriber directly to a dedicated channel in the target cell. The process includes the following processes.

Block One: The original BSC sends the original MSC the Handover required message including the target cell identifier via the SCCP connection corresponding to the current talking service subscriber.

Block Two: If the target cell and the original cell belong to the different MSCs respectively, the original MSC sends the MAP PREPARE HANDOVER message to the target MSC.

Block Three: The target MSC sets up a new dedicated SCCP connection and assigns a new A interface circuit, then sends the target BSC the Handover request message including the newly assigned Circuit Identity Code of the A interface.

Block Four: The target BSC assigns a new dedicated channel and sends the target MSC the MAP_PREPARE_HANDOVER Ack.

If the target cell and the original cell belong to the different MSCs respectively, the target MSC forwards the MAP PREPARE HANDOVER acknowledge message to the original MSC.

Block Five: The original MSC sends the original BSC the Handover command message including the channel description of the target cell via the SCCP connection corresponding to the current talking service subscriber and the original BSC switches the talking service subscriber to the dedicated channel of the target cell.

Block Six: After the handover, the target BSC sends the target MSC the Handover complete message via the newly assigned SCCP connection.

If the target cell and the original cell belong to the different MSCs respectively, the target MSC forwards the Handover complete message to the original MSC.

If the target cell and the original cell respectively belong to the different BSCs belonging to the same MSC, or the different MSCs, the original MSC sends the Handover succeeded message to the original BSC.

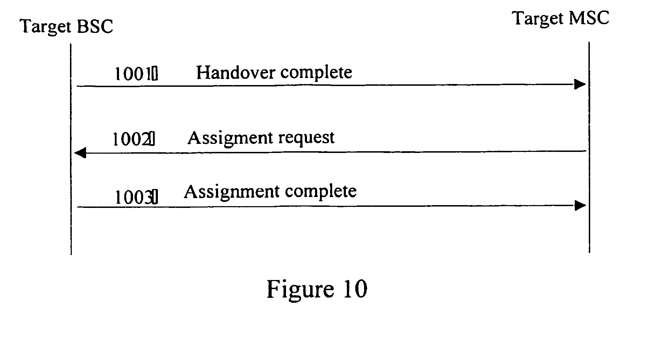

Method 2: After the talking service subscriber has been switched from the dedicated channel of the original cell to the group call channel of the target cell, the MSC allocates the talking service subscriber to the dedicated channel of the target cell again. Figure 10 shows the processes in detail.

Process 1001: The target BSC sends the handover complete message.

Process 1002: The target MSC sends an assignment request message including value of the newly assigned interface Circuit Identity Code and the target cell identifier via a newly assigned dedicated SCCP connection.

Process 1003: Upon the receipt of the assignment request message, the target BSC assigns a new dedicated channel in the target cell and allocates the talking service subscriber to the dedicated channel.

Though the present invention has been illustrated by referring to some embodiments of the present invention, a skilled person in the art should understand that various changes can be made in its form and details without departing from the scope of the present invention, as defined by the appended claims.

## Claims

1. A method for a network to control a group call service, comprising:
determining (401) a channel assignment mode of the group call service based on a group call channel assignment mode indication of a group configured by the network in advance when the group call service is initiated, or when a group call service subscriber occupies an uplink, or when a handover occurs in the group call service; and
performing (402) channel assignment for the group call service based on the channel assignment mode of the group call service;
wherein determining (401) the channel assignment mode of the group call service based on the group call channel assignment mode indication of the group comprises either:
when a group call is initiated or a group call service subscriber occupies an uplink,
determining, by the network, when the group call channel assignment mode indication of the group indicates 1.0 CHM, to assign a group call channel to a talking service subscriber in the cell where there is a talking service subscriber, wherein 1.0 CHM is a channel assignment method of the group call service in the Global System for Mobile, GSM, -based digital trunking radio communication system wherein the talking service subscriber in the group call occupies the group call channel and the talking service subscriber exclusively occupies the group call channel uplink and shares the group call channel downlink with other group call service subscribers in a cell; or
assigning a dedicated channel to a talking service subscriber in the cell when the group call channel assignment mode indication of the group indicates 1.5 CHM; and keeping the talking service subscriber on the dedicated channel without releasing the dedicated channel assigned to the talking service subscriber unless a handover occurs and the uplink is released, wherein 1.5 CHM is a channel assignment method of the group call service in the GSM-based digital trunking radio communication system wherein the talking service subscriber in the group call occupies another dedicated traffic channel other than the group call channel, the group call channel uplink is free and the group call channel downlink is shared by all other group call service subscribers; or when a handover occurs in the group call service, determining (401) a channel assignment mode of the group call service based on the group call channel assignment mode indication of the group comprises either:
determining to switch a talking service subscriber to a group call channel of a target cell when the group call channel assignment mode indication of the group indicates 1.0 CHM; or
determining to assign a dedicated channel in a target cell and switching a talking service subscriber to the dedicated channel when the group call channel assignment mode indication of the target cell indicates 1.5 CHM.

2. The method according to Claim 1, further comprising:
storing the group call channel assignment mode indication in a group call register.

3. The method according to Claim 1, further comprising:
sending (504, 505) the group call channel assignment mode indication in a group call register interrogation acknowledge message and a prepare group call message.

4. The method according to Claim 1, wherein determining a channel assignment mode of a group call service based on a group call channel assignment mode indication of the group further comprises either:
determining to perform channel assignment for the group call service based on a group call channel assignment mode indication of a cell when the group call channel assignment mode indication of the group is null; or
determining to randomly perform channel assignment for the group call service by a network when both the group call channel assignment mode indication of the group and the group call channel assignment mode indication of the cell are null.

5. An apparatus for controlling a group call service in a network, comprising:
a control unit (202), adapted to determine a channel assignment mode of the group call service based on a group call channel assignment mode indication of a group configured by the network in advance when the group call service is initiated, or when a group call service subscriber occupies an uplink, or when a handover occurs in the group call service; and
a resource assignment unit (203), adapted to perform channel assignment for the group call service based on the channel assignment mode of the group call service;
wherein the control unit (202) is adapted to determine the channel assignment mode of the group call service based on the group call channel assignment mode indication of the group by either:
when a group call is initiated or a group call service subscriber occupies an uplink,
determining, by the control unit (202), when the group call channel assignment mode indication of the group indicates 1.0 CHM, to assign a group call channel to a talking service subscriber in the cell where there is a talking service subscriber, wherein 1.0 CHM is a channel assignment method of the group call service in the Global System for Mobile, GSM, -based digital trunking radio communication system wherein the talking service subscriber in the group call occupies the group call channel and the talking service subscriber exclusively occupies the group call channel uplink and shares the group call channel downlink with other group call service subscribers in a cell; or
assigning a dedicated channel to a talking service subscriber in the cell when the group call channel assignment mode indication of the group indicates 1.5 CHM; and keeping the talking service subscriber on the dedicated channel without releasing the dedicated channel assigned to the talking service subscriber unless a handover occurs and the uplink is released, wherein 1.5 CHM is a channel assignment method of the group call service in the GSM-based digital trunking radio communication system wherein the talking service subscriber in the group call occupies another dedicated traffic channel other than the group call channel, the group call channel uplink is free and the group call channel downlink is shared by all other group call service subscribers; or when a handover occurs in the group call service, determining, by the control unit (202), the channel assignment mode of the group call service based on the group call channel assignment mode indication of the group by either:
determining to switch a talking service subscriber to a group call channel of a target cell when the group call channel assignment mode indication of the group indicates 1.0 CHM; or
determining to assign a dedicated channel in a target cell and switching a talking service subscriber to the dedicated channel when the group call channel assignment mode indication of the target cell indicates 1.5 CHM.

6. The apparatus according to Claim 5, further comprising:
a management unit (201), adapted to configure the group call channel assignment mode information of the group as a group call channel assignment mode indication of the group.

7. The apparatus according to Claim 5, further comprising:
a transmission unit, adapted to transmit the group call channel assignment mode indication of the group on the network.

## Patentansprüche

1. Verfahren für ein Netz zum Steuern eines Gruppenanrufdienstes, mit den folgenden Schritten:
Bestimmen (401) eines Kanalvergabemodus des Gruppenanrufdienstes auf der Basis einer Gruppenanruf-Kanatvergabemodusindikation einer Gruppe, die im Voraus durch das Netz konfiguriert wird, wenn der Gruppenanrufdienst eingeleitet wird oder wenn ein Gruppenanruf-Dienstteilnehmer eine Aufwärtsstrecke belegt oder wenn ein Handover in dem Gruppenanrufdienst auftritt; und
Durchrühren (402) von Kanalvergabe für den Gruppenanrufdienst auf der Basis des Kanalvergabemodus des Gruppenanrufdienstes;
wobei das Bestimmen (401) des Kanalvergabemodus des Gruppenanrufdienstes auf der Basis der Gruppenanruf-Kanalvergabemodusindikation der Gruppe eine der folgenden Möglichkeiten umfasst:
wenn ein Gruppenanruf eingeleitet wird oder ein Gruppenanruf-Dienstteilnehmer eine Aufwärtsstrecke belegt, Bestimmen durch das Netz, einen Gruppenanrufkanal an einen sprechenden Dienstteilnehmer in der Zelle, wo sich ein sprechender Dienstteilnehmer befindet, zu vergeben, wenn die Gruppenanruf-Kanalvergabemodusindikation der Gruppe 1.0 CHM angibt, wobei 1.0 CHM ein Kanalvergabeverfahren des Gruppenanrufdienstes in dem auf dem Global System for Mobile GSM basierenden digitalen Bündelfunkkommunikationssystem ist, wobei der sprechende Dienstteilnehmer in dem Gruppenanruf den Gruppenanrufkanal belegt und der sprechende Dienstteilnehmer die Gruppenanrufkanalaufwärtsstrecke ausschließlich belegt und sich die Gruppenanrufkanalabwärtsstrecke mit anderen Gruppenanruf-Dienstteilnehmern in einer Zelle teilt; oder
Vergeben eines dedizierten Kanals an einen sprechenden Dienstteilnehmer in der Zelle, wenn die Gruppenanruf-Kanalvergabemodusindikation der Gruppe 1.5 CHM angibt; und Halten des sprechenden Dienstteilnehmers auf dem dedizierten Kanal, ohne den an den sprechenden Dienstteilnehmer vergebenen dedizierten Kanal freizugeben, wenn nicht ein Handover auftritt und die Aufwärtsstrecke freigegeben wird, wobei 1.5 CHM ein Kanalvergabeverfahren des Gruppenanrufdienstes in dem auf GSM basierenden digitalen Bündelfunkkommunikationssystem ist, wobei der sprechende Dienstteilnehmer in dem Gruppenanruf einen anderen dedizierten Verkehrskanal als den Gruppenanrufkanal belegt, die Gruppenanrufkanalaufwärtsstrecke frei ist und sich alle anderen Gruppenanruf-Dienstteilnehmer die Gruppenanrufkanalabwärtsstrecke teilen; oder wenn ein Handover in dem Gruppenanrufdienst auftritt, das Bestimmen (401) eines Kanalvergabemodus des Gruppenanrufdienstes auf der Basis der Gruppenanruf-Kanalvergabemodusindikation der Gruppe eine der folgenden Möglichkeiten umfasst:
Bestimmen, einen sprechenden Dienstteilnehmer auf einen Gruppenanrufkanal einer Zielzelle zu schalten, wenn die Gruppenanruf-Kanalvergabemodusindikation der Gruppe 1.0 CHM angibt; oder
Bestimmen, einen dedizierten Kanal in einer Zielzelle zu vergeben und einen sprechenden Dienstteilnehmer auf den dedizierten Kanal zu schalten, wenn die Gruppenanruf-Kanalvergabemodusindikation der Zielzelle 1.5 CHM angibt.

2. Verfahren nach Anspruch 1, ferner mit dem folgenden Schritt:
Speichern der Gruppenanruf-Kanalvergabemodusindikation in einem Gruppenanrufregister.

3. Verfahren nach Anspruch 1, ferner mit dem folgenden Schritt:
Senden (504, 505) der Gruppenanruf-Kanalvergabemodusindikation in einer Gruppenanruf-Registrierabfragebestätigungsnachricht und einer Gruppenanruf-Erstellungsnachricht.

4. Verfahren nach Anspruch 1, wobei das Bestimmen eines Kanalvergabemodus eines Gruppenanrufdienstes auf der Basis einer Gruppenanruf-Kanalvergabemodusindikation der Gruppe ferner eine der folgenden Möglichkeiten umfässt:
Bestimmen, Kanalvergabe für den Gruppenanrufdienst auf der Basis einer Gruppenanruf-Kanalvergabemodusindikation einer Zelle durchzuführen, wenn die Gruppenanruf-Kanalvergabemodusindikation der Gruppe null ist; oder
Bestimmen, Kanalvergabe für den Gruppenanrufdienst durch ein Netz zufällig durehzuführen, wenn sowohl die Gruppenanruf-Kanalvergabemodusindikation der Gruppe als auch die Gruppenanruf-Kanalvergabemodusindikation der Zelle null sind.

5. Vorrichtung zum Steuern eines Gruppenanrufdienstes in einem Netz, umfassend:
eine Steuereinheit (202), die dafür ausgelegt ist, einen Kanalvergabemodus des Gruppenanrufdienstes auf der Basis einer Gruppenanruf-Kanalvergabemodusindikation einer Gruppe, die durch das Netz im Voraus konfiguriert wird, zu bestimmten, wenn der Gruppenanrufdienst eingeleitet wird oder
wenn ein Gruppenanruf-Dienstteilnehmer eine Aufwärtsstrecke belegt oder wenn ein Handover in dem Gruppenanrufdienst auftritt, und
eine Betriebsmittelvergabeeinheit (203), die dafür ausgelegt ist, Kanalvergabe für den Gruppenanrufdienst auf der Basis des Kanalvergabemodus des Gruppenanrufdienstes durchzuführen;
wobei die Steuereinheit (202) dafür ausgelegt ist, den Kanalvergabemodus des Gruppenanrufdienstes auf der Basis der Gruppenanruf-Kanalvergabemodusindikation der Gruppe durch eine der folgenden Möglichkeiten zu bestimmen:
wenn ein Gruppenanruf eingeleitet wird oder ein Gruppenanruf-Dienstteilnehmer eine Aufwärtsstrecke belegt, Bestimmen durch die Steuereinheit (202), einen Gruppenanrufkanal an einen sprechenden Dienstteilnehmer in der Zelle, wo sich ein sprechender Dienstteilnehmer befindet, zu vergeben, wenn die Gruppenanruf-Kanalvergabemodusindikation der Gruppe 1.0 CHM angibt, wobei 1.0 CHM ein Kanalvergabeverfahren des Gruppenanrufdienstes in dem auf dem Global System for Mobile GSM basierenden digitalen Bündelfunkkommunikationssystem ist, wobei der sprechende Dienstteilnehmer in dem Grruppenanruf den Gruppenanrufkanal belegt und der sprechende Dienstteilnehmer die Gruppenanrufkanalaufwärtsstrecke ausschließlich belegt und sich die Gruppenanrufkanalabwärtsstrecke mit anderen Gruppenanruf-Dienstteilnehmern in einer Zelle teilt; oder
Vergeben eines dedizierten Kanals an einen entsprechenden Dienstteilnehmer in der Zelle, wenn die Gruppenanruf-Kanalvergabemodusindikation der Gruppe 1.5 CHM angibt; und Halten des sprechenden Dienstteilnehmers auf dem dedizierten Kanal, ohne den an den sprechenden Dienstteilnehmer vergebenen dedizierten Kanal freizugeben, wenn nicht ein Handover auftritt und die Aufwärtsstrecke freigegeben wird, wobei 1.5 CHM ein Kanalvergabeverfahren des Gruppenanrufdienstes in dem auf GSM basierenden digitalen Bündelfunkkommunikationssystem ist, wobei der sprechende Dienstteilnehmer in dem Gruppenanruf einen anderen dedizierten Verkehrskanal als den Gruppenanrufkanal belegt, die Gruppenanrufkanalauiwärtsstrecke frei ist und sich alle anderen Gruppenanruf-Dienstteilnehmer die Gruppenanrufkanalabwärtsstrecke teilen; oder wenn ein Handover in dem Gruppenanrufdienst auftritt, das Bestimmen durch die Steuereinheit (202) des Kanalvergabemodus des Gruppenanrufdienstes auf der Basis der Gruppenanruf-Kanalvergabemodusindikation der Gruppe eine der folgenden Möglichkeiten umfasst:
Bestimmen, einen sprechenden Dienstteilnehmer auf einen Gruppenanrufkanal einer Zielzelle zu schalten, wenn die Gruppenanruf-Kanalvergabemodusindikation der Gruppe 1.0 CHM angibt; oder
Bestimmen, einen dedizierten Kanal in einer Zielzelle zu vergeben und einen sprechenden Dienstteilnehmer auf den dedizierten Kanal zu schalten, wenn die Gruppenanruf-Kanalvergabemodusindikation der Zielzelle 1.5 CHM angibt.

6. Vorrichtung nach Anspruch 5, ferner umfassend:
eine Verwaltungseinheit (201), die dafür ausgelegt ist, die Gruppenanruf-Kanalvergabemodusinformationen der Gruppe als eine Gruppenanruf-Kanalvergabemodusindikation der Gruppe zu konfigurieren.

7. Vorrichtung nach Anspruch 5, ferner umfassend:
eine Übertragungseinheit, die dafür ausgelegt ist, die Gruppenanruf-Kanalvergabemodusindikation der Gruppe in dem Netz zu übertragen.

## Revendications

1. Procédé de commande d'un service d'appel de groupe pour réseau, comprenant :
la détermination (401) d'un mode d'attribution de canal du service d'appel de groupe en fonction d'une indication de mode d'attribution de canal d'appel de groupe d'une groupe configuré à l'avance par le réseau quand le service d'appel de groupe est lancé, ou quand un abonné au service d'appel de groupe occupe une liaison montante, ou quand un transfert se produit dans le service d'appel de groupe ; et
l'exécution (402) d'une attribution de canal pour le service d'appel de groupe en fonction du mode d'attribution de canal du service d'appel de groupe ;
dans lequel la détermination (401) du mode d'attribution de canal du service d'appel de groupe en fonction de l'indication de mode d'attribution de canal d'appel de groupe du groupe comprend soit :
quand un appel de groupe est lancé ou quand un abonné au service d'appel de groupe occupe une liaison montante,
le fait de déterminer, par le réseau, quand l'indication de mode d'attribution de canal d'appel de groupe du groupe indique 1.0 CHM, d'assigner un canal d'appel de groupe à un abonné au service parlant dans la cellule où se trouve un abonné au service parlant, 1.0 CHM étant un procédé d'attribution de canal du service d'appel de groupe dans le système de radiocommunications à ressources partagées numérique basé sur le Global System for Mobile, GSM, dans lequel l'abonné au service parlant dans l'appel de groupe occupe le canal d'appel de groupe et l'abonné au service parlant occupe exclusivement la liaison montante du canal d'appel de groupe et partage la liaison descendante du canal d'appel de groupe avec d'autres abonnés au service d'appel de groupe dans une cellule ; soit
l'attribution d'un canal dédié à un abonné au service parlant dans la cellule quand l'indication de mode d'attribution de canal d'appel de groupe du groupe indique 1.5 CHM ; et le maintien de l'abonné au service parlant sur le canal dédié sans libérer le canal dédié attribué à l'abonné au service parlant à moins qu'un transfert se produise et que la liaison montante soit libérée, 1.5 CHM étant un procédé d'attribution de canal du service d'appel de groupe dans le système de radiocommunications à ressources partagées numérique basé sur le GSM, dans lequel l'abonné au service parlant dans l'appel de groupe occupe un autre canal de trafic dédié différent du canal d'appel de groupe, la liaison montante du canal d'appel de groupe est libre et la liaison descendante du canal d'appel de groupe est partagée entre tous les autres abonnés au service d'appel de groupe ; ou quand un transfert se produit dans le
service d'appel de groupe, la détermination (401) d'un mode d'attribution de canal du service d'appel de groupe en fonction de l'indication de mode d'attribution de canal d'appel de groupe du groupe comprend soit :
le fait de déterminer de commuter un abonné au service parlant sur un canal d'appel de groupe d'une cellule cible quand l'indication de mode d'attribution de canal d'appel de groupe du groupe indique 1.0 CHM ; soit
le fait de déterminer d'attribuer un canal dédié dans une cellule cible et la commutation d'un abonné au service parlant sur le canal dédié quand l'indication de mode d'attribution de canal d'appel de groupe de la cellule cible indique 1.5 CHM.

2. Procédé selon la revendication 1, comprenant en outre :
la mémorisation de l'indication de mode d'attribution de canal d'appel de groupe dans un enregistreur d'appel de groupe.

3. Procédé selon la revendication 1, comprenant en outre :
l'envoi (504, 505) de l'indication de mode d'attribution de canal d'appel de groupe dans un message d'acquittement d'interrogation d'enregistreur d'appel de groupe et un message de préparation d'appel de groupe.

4. Procédé selon la revendication 1, dans lequel la détermination d'un mode d'attribution de canal d'un service d'appel de groupe en fonction d'une indication de mode d'attribution de canal d'appel de groupe du groupe comprend en outre soit :
le fait de déterminer d'exécuter l'attribution de canal du service d'appel de groupe en fonction d'une indication de mode d'attribution de canal d'appel de groupe d'une cellule quand l'indication de mode d'attribution de canal d'appel de groupe du groupe est nulle : soit
le fait de déterminer d'exécuter de manière aléatoire l'attribution de canal du service d'appel de groupe par un réseau quand à la fois l'indication de mode d'attribution de canal d'appel de groupe du groupe et l'indication de mode d'attribution de canal d'appel de groupe de la cellule sont nulles.

5. Appareil de commande d'un service d'appel de groupe dans un réseau, comprenant :
une unité de commande (202), adaptée pour déterminer un mode d'attribution de canal du service d'appel de groupe en fonction d'une indication de mode d'attribution de canal d'appel de groupe d'un groupe configuré à l'avance par le réseau quand le service d'appel de groupe est lancé, ou quand un abonné au service d'appel de groupe occupe une liaison montante, ou quand un transfert se produit dans le service d'appel de groupe ; et
une unité d'attribution de ressources (203), adaptée pour exécuter une attribution de canal pour le service d'appel de groupe en fonction du mode d'attribution de canal du service d'appel de groupe ;
dans lequel l'unité de commande (202) est adaptée pour déterminer le mode d'attribution de canal du service d'appel de groupe en fonction de l'indication de mode d'attribution de canal d'appel de groupe du groupe soit :
quand un appel de groupe est lancé ou quand un abonné au service d'appel de groupe occupe une liaison montante,
en déterminant, par l'unité de commande (202), quand l'indication de mode d'attribution de canal d'appel de groupe du groupe indique 1.0 CHM, d'assigner un canal d'appel de groupe à un abonné au service parlant dans la cellule où se trouve un abonné au service parlant, 1.0 CHM étant un procédé d'attribution de canal du service d'appel de groupe dans le système de radiocommunications à ressources partagées numérique basé sur le Global System for Mobile, GSM, dans lequel l'abonné au service parlant dans l'appel de groupe occupe le canal d'appel de groupe et l'abonné au service parlant occupe exclusivement la liaison montante du canal d'appel de groupe et partage la liaison descendante du canal d'appel de groupe avec d'autres abonnés au service d'appel de groupe dans une cellule ; soit
en attribuant un canal dédié à un abonné au service parlant dans la cellule quand l'indication de mode d'attribution de canal d'appel de groupe du groupe indique 1.5 CHM ; et en maintenant l'abonné au service parlant sur le canal dédié sans libérer le canal dédié attribué à l'abonné au service parlant à moins qu'un transfert se produise et que la liaison montante soit libérée, 1.5 CHM étant un procédé d'attribution de canal du service d'appel de groupe dans le système de radiocommunications à ressources partagées numérique basé sur le GSM, dans lequel l'abonné au service parlant dans l'appel de groupe occupe un autre canal de trafic dédié différent du canal d'appel de groupe, la liaison montante du canal d'appel de groupe est libre et la liaison descendante du canal d'appel de groupe est partagée entre tous les autres abonnés au service d'appel de groupe ; ou quand un transfert se produit dans le service d'appel de groupe, en déterminant, par l'unité de commande (202), le mode d'attribution de canal du service d'appel de groupe en fonction de l'indication de mode d'attribution de canal d'appel de groupe du groupe soit :
en déterminant de commuter un abonné au service parlant sur un canal d'appel de groupe d'une cellule cible quand l'indication de mode d'attribution de canal d'appel de groupe du groupe indique 1.0 CHM ; soit
en déterminant d'attribuer un canal dédié dans une cellule cible et en commutant un abonné au service parlant sur un canal dédié quand l'indication de mode d'attribution de canal d'appel de groupe de la cellule cible indique 1.5 CHM.

6. Appareil selon la revendication 5, comprenant en outre :
une unité de gestion (201), adaptée pour configurer les informations de mode d'attribution de canal d'appel de groupe du groupe comme indication de mode d'attribution de canal d'appel de groupe du groupe.

7. Appareil selon la revendication 5, comprenant en outre:
une unité de transmission, adaptée pour transmettre l'indication de mode d'attribution de canal d'appel de groupe du groupe sur le réseau.
